# EUROPÄISCHE PATENTSCHRIFT

(11) **EP 2 911 820 B1**
(45) Veröffentlichungstag und Bekanntmachung des Hinweises auf die Patenterteilung: **12.12.2018**
(21) Anmeldenummer: 13776730.7
(22) Anmeldetag: 15.10.2013
(51) Int. Cl.: B23B 27/14, B23B 29/24, B23D 1/00, B23D 1/08, B23D 5/00, B23D 13/00

(54) **VERFAHREN ZUM PLANBEARBEITEN VON OBERFLÄCHEN AN WERKSTÜCKEN**
METHOD FOR FACING SURFACES OF WORKPIECES
PROCÉDÉ DE DRESSAGE DE SURFACES SUR DES PIÈCES

(30) Priorität: 29.10.2012 DE 102012021275
(43) Veröffentlichungstag der Anmeldung: 02.09.2015
(73) Patentinhaber: Audi AG, 85045 Ingolstadt (DE)
(72) Erfinder: KOPTON, Peter, 85092 Kösching (DE)
(74) Vertreter: Neuhausen, Marc-Alexander
(86) Internationale Anmeldenummer: PCT/EP2013/003098
(87) Internationale Veröffentlichungsnummer: WO 2014/067619

(56) Entgegenhaltungen:
- DE-A1-102009 013 625
- JP-A- 2008 246 597
- JP-A- 2012 051 070

## Beschreibung

Die vorliegende Erfindung betrifft ein Verfahren zum Planbearbeiten von Oberflächen an Werkstücken, insbesondere aus Leichtmetall, gemäß dem Oberbegriff des Patentanspruchs 1. Ein Beispiel für ein solches Verfahren zeigt die CH 113 783 A. Übliche Verfahren zum Planbearbeiten von Oberflächen von Werkstücken sind das Fräsen mit zum Beispiel Stirnfräsköpfen, die in definierten Vorschubrichtungen über das Werkstück geführt werden, ferner das Hobeln oder Stoßen, bei denen mit linearer Vorschubbewegung stufenförmig das Material abgetragen wird, oder zum Beispiel das Flächenschleifen. Für Werkstücke aus Leichtmetall hat sich besonders das Fräsen bewährt, mit dem eine hohe Oberflächengüte erzielbar ist, wie sie zum Beispiel für Planflächen von Bauteilen für Antriebsaggregate von Kraftfahrzeugen erwünscht sind, die gegebenenfalls auch Dichtfunktionen zu erfüllen haben.

Neben der CH 113 783 A sind weitere Verfahren zum Planbearbeiten von Werkstückoberflächen aus der JP 2008 246597 A, aus der JP 2012 051070 A, aus der JP 2006 198694 A, aus der DE 13 00 783 B und aus der US 160 161 A bekannt.

Die Aufgabe der Erfindung besteht darin, ein Verfahren vorzuschlagen, das bei sehr günstigen Bearbeitungszeiten hohe Oberflächenqualitäten der Planflächen ermöglicht. Die Lösung der verfahrensgemäßen Aufgabe gelingt mit den Merkmalen des Patentanspruchs 1. Vorteilhafte Weiterbildungen des Verfahrens sind Gegenstand der abhängigen Ansprüche. Erfindungsgemäß wird vorgeschlagen, dass das Schneidwerkzeug mit einer oder mehreren, im Wesentlichen parallel zur Oberfläche ausgerichteten Schneidleisten in einer definierten Vorschubrichtung bewegt wird, wobei die mindestens eine Schneidleiste stets in einem Winkel Pi von < 90°, jedoch > 0° zur Vorschubrichtung eingestellt wird. Durch diese Maßnahme wird ein Schnittverlauf an der mindestens einen Schneidleiste erzeugt, der quasi eine Kombination aus Hobeln bzw. Stoßen mit entsprechendem Schnittwinkel an den Schneidleisten und einem Fräsen mit schräg zur Vorschubrichtung sich ausbildender Spanbildung erzeugt. Überraschende Vorteile dabei sind eine geringe Wärmeentwicklung auch bei Trockenbearbeitung, hohe Vorschübe, der Einsatz von kostengünstigen Schneidstoffen durch geringe Schnittgeschwindigkeiten, sowie hohe Oberflächenqualitäten.

Der Winkel Pi der mindestens einen Schneidleiste wird zur Vorschubrichtung während der Bearbeitung kontinuierlich oder temporär verändert, wobei zum Beispiel günstige Anpassungen der Bearbeitung an die geometrischen Gegebenheiten des Werkstücks bzw. dessen Oberflächenbereiche erzielbar sind.

Des Weiteren hat es sich als besonders zweckmäßig erwiesen, wenn die mindestens eine Schneidleiste des Schneidwerkzeugs während der Vorschubbewegung um einen Punkt A des Schneidwerkzeugs verschwenkt wird, wobei der Punkt A auf einer der Endseiten der mindestens einen Schneidleiste, mittig der mindestens einen Schneidleiste des Schneidwerkzeugs in der Mittelachse der Aufspanneinrichtung oder zwischen den Endseiten und der Mitte der mindestens einen Schneidleiste des Schneidwerkzeugs liegen kann. Damit ist ein weiterer Freiheitsgrad zur Anpassung des Schnittverlaufs zum Beispiel auch an die Werkstoffeigenschaften des zu bearbeitenden Werkstücks gegeben.

In einer weiteren, vorteilhaften Ausgestaltung des erfindungsgemäßen Verfahrens kann die eingesteuerte Vorschubrichtung des Schneidwerkzeugs linear, kreisförmig, elliptisch oder anderweitig nichtlinear gesteuert werden, um eine weitere Anpassung an individuell geometrische und werkstofftechnische Gegebenheiten und Anforderungen zu schaffen.

Eine besonders bevorzugte Vorrichtung zur Durchführung des Verfahrens an einer Werkzeugmaschine mit einer in Vorschubrichtung und Drehrichtung antreibbaren Aufspanneinrichtung (Spindel) für ein Schneidwerkzeug besteht darin, dass das Schneidwerkzeug einen Trägerkörper, ein Aufspannmittel (Pinole) und zumindest eine am Trägerkörper befestigte, im Wesentlichen lineare Schneidleiste aufweist. Die Schneidleiste kann eine Diamantleiste, eine Hartmetallleiste oder eine Leiste aus einem hochlegierten Werkzeugstahl sein, die verfahrensgemäß zur Vorschubrichtung geneigt angeordnet ist.

An dem Schneidwerkzeug können alternativ mehrere, gestaffelt angeordnete Schneidleisten vorgesehen sein, die an separaten Spannschienen und gegebenenfalls höheneinstellbar befestigt sind und die in der Schnittfunktion wie eine einzige, durchgehende Schneidleiste ausgerichtet sind.

Im Schneidwerkzeug den Schneidleisten vorgelagert kann zumindest ein Auffangkanal für bei der Bearbeitung entstehender Späne vorgesehen sein. Dies stellt sicher, dass keine Beeinträchtigungen der zu bearbeitenden Oberfläche durch Verquetschungen etc. bereits abgetragener Späne auftreten können. Zudem wird ein Späneeintrag in das Bauteil vermieden.

Dazu können ferner im Schneidwerkzeug Spülkanäle vorgesehen sein, mittels denen nach dem Bearbeitungsvorgang der Auffangkanal von Bearbeitungsspänen zum Beispiel mittels Druckluft befreibar ist. Die Späne werden demzufolge im Schneidwerkzeug solange gehalten, bis der Bearbeitungsvorgang oder zumindest ein Bearbeitungszyklus abgeschlossen ist und erst danach ausgespült.

Bei einer feuchten Bearbeitung der Oberflächen des Werkstücks können ferner im Schneidwerkzeug Kühlmittelkanäle zum Zuführen eines Schmier- und/oder Kühlmittels, zum Beispiel einer Emulsion, zu den Schneidleisten vorgesehen sein. Bei einer Minimalmengenschmierung (MMS) kann ein MMS-Medium zugeführt werden.

Schließlich besteht eine besonders bevorzugte Verwendung der Vorrichtung in der Bearbeitung der planen Oberflächen von Zylinderköpfen, Zylinderkurbelgehäusen und/oder Getriebegehäusen aus Leichtmetall von Antriebsaggregaten für Kraftfahrzeuge.

Das erfindungsgemäße Verfahren sowie zur Durchführung des Verfahrens geeignete Vorrichtungen sind im Folgenden anhand der beigefügten, schematischen Zeichnung näher erläutert. Es zeigen:
- Fig. 1: eine raumbildliche Ansicht auf ein als Monoblock ausgebildetes Schneidwerkzeug mit einem Trägerkörper, einer massiven Pinole als Aufspannmittel und einer durchgehenden Schneidleiste;
- Fig. 2: eine skizzenhafte Darstellung der Ausrichtung des Schneidwerkzeugs mit der Schneidleiste gemäß Fig. 1 in drei Bearbeitungsbahnen, wobei die Schneidleiste jeweils um einen Punkt A verschwenkt wird;
- Fig. 3: die Bearbeitung der Planfläche an einem Zylinderkopf für Brennkraftmaschinen in mehreren Bearbeitungsschritten mittels des Schneidwerkzeugs nach Fig. 1;
- Fig. 4 und 5: jeweils Ansichten entlang der Schnittebene I-I aus der Fig. 3, anhand welcher zusätzliche Bearbeitungsschritte zur Planbearbeitung der Dichtfläche des Zylinderkopfes erläutert sind;
- Fig. 6: ein zur Fig. 1 alternatives Schneidwerkzeug mit mehreren, gestaffelt angeordneten Schneidleisten; und
- Fig. 7: das Schneidwerkzeug nach Fig. 6 in einer teilweisen Seitenansicht mit Darstellung der den Schneidleisten vorgelagerten Auffangkanäle für Späne.

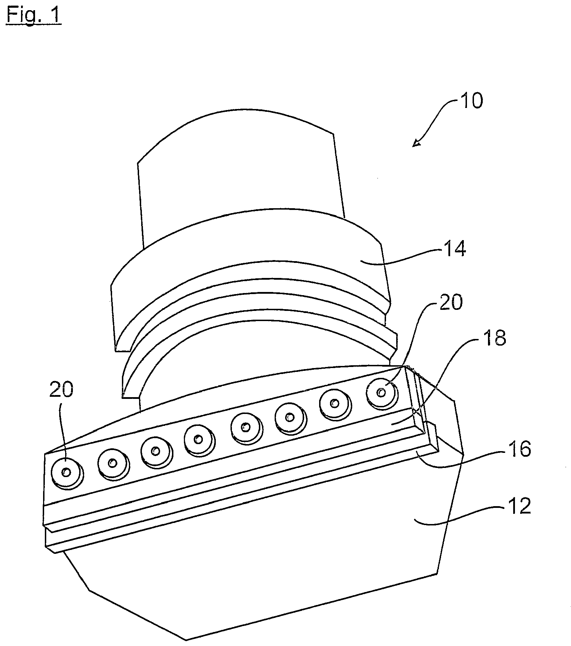

In der Fig. 1 ist ein Schneidwerkzeug 10 schematisch dargestellt, das sich aus einem Trägerkörper 12, einem Aufspannmittel bzw. einer massiv ausgeführten Pinole 14 und einer linear ausgeführten Schneidleiste 16 zusammensetzt.

Die Schneidleiste 16 kann bei einer geringeren Länge eine Diamantleiste, alternativ eine Hartmetallleiste oder eine Leiste aus hochlegiertem Werkzeugstahl (Schnellschnittstahl) sein und ist mittels einer Spannschiene 18 und mehrerer Schrauben 20 an dem Trägerkörper 12 befestigt. In einer anderen Ausführungsform kann die Spannschiene 18 auch an dem Trägerkörper 12 angelötet sein.

Die Schneidleiste 16 ist in ihrer Querschnittskontur ähnlich einem Hobel- oder Stoßwerkzeug mit einem nicht näher dargestellten Schnittwinkel der Schneide ausgebildet.

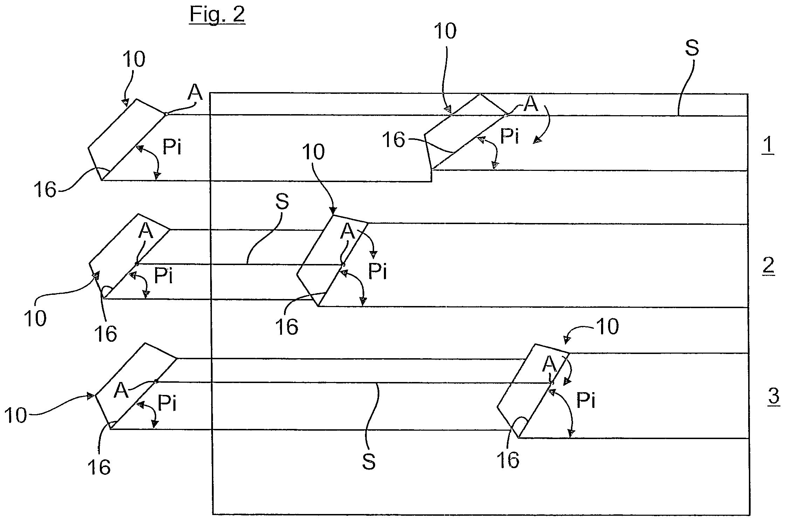

Das an einer nicht dargestellten Werkzeugmaschine aufgespannte Schneidwerkzeug 10 kann rotatorisch und translatorisch entlang einer Vorschubrichtung s zur Planbearbeitung von Oberflächen von Werkstücken bewegt werden, wie dies in den Fig. 2 bis 4 beschrieben ist.

Gemäß Fig. 2 kann das Schneidwerkzeug 10 über die Werkzeugmaschine geführt in Bahn 1 um einen Schwenkpunkt A in einem Winkel Pi von ca. 45° zur Vorschubrichtung s angestellt und dann in Vorschubrichtung s linear vorgetrieben werden, wobei mit entsprechend in der Tiefe auf das Oberflächenmaß eingestellter Schneidleiste 16 die Planbearbeitung erfolgt.

Der Schwenkpunkt A ist in Bahn 1 an der einen Endseite der Schneidleiste 16 positioniert. Der Schwenkwinkel Pi wird während der Bearbeitung zwischen 0° bis 90° zur Vorschubrichtung s variiert, zum Beispiel um in der Breite veränderliche Bearbeitungsbahnen zu schaffen.

In der Bahn 2 liegt der Schwenkpunkt A des Schneidwerkzeugs 10 in der Mitte der linearen Schneidleiste 16, der Winkel Pi kann wiederum in Anpassung an geometrische und/oder werkstoffspezifische Gegebenheiten variiert werden.

Die Bahn 3 zeigt einen Schwenkpunkt A des Schneidwerkzeugs 10, der zwischen dem endseitigen Schwenkpunkt A (Bahn 1) und dessen mittiger Positionierung (Bahn 2) liegt und der ebenfalls bei Bedarf während der Bearbeitung veränderbar ist (siehe eingezeichnete Pfeile).

Die Bahnen 1 bis 3 zeigen eine bevorzugt lineare Vorschubbewegung s. Diese kann aber auch über die Werkzeugmaschine gesteuert nichtlinear bzw. kreisförmig, elliptisch oder dergl. sein, unter anderem auch bestimmt durch die gewählte Position des Schwenkpunkts A.

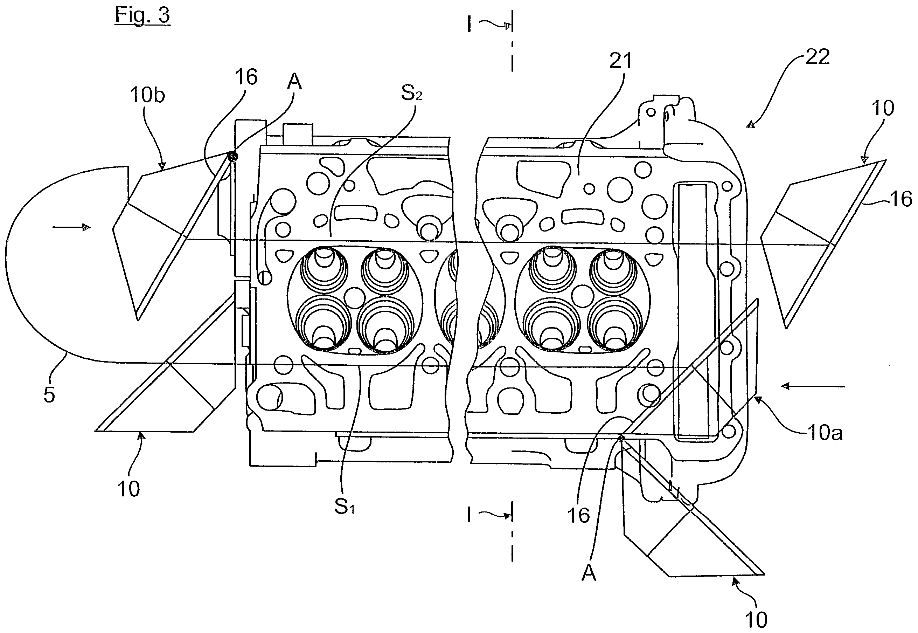

Die Fig. 3 zeigt skizzenhaft eine Planbearbeitung einer einem Zylinderkurbelgehäuse einer Brennkraftmaschine zugewandten Oberfläche (Dichtfläche 21) eines Zylinderkopfes 22 aus Leichtmetall bzw. einer Aluminiumlegierung, deren Planbearbeitung mittels der Werkzeugmaschine und des Schneidwerkzeugs 10 in mehreren Arbeitsschritten erfolgt.

Dabei wird mittels der Werkzeugmaschine das Schneidwerkzeug 10 mit einer rotatorisch und translatorisch gesteuerten Bewegung in die Position 10a mit einer gemäß Bahn 1 der Fig. 2 schräg angestellten Schneidleiste 16 verfahren, höheneingestellt und schließlich entlang der Vorschubrichtung s1 parallel zur herzustellenden Oberfläche vorgetrieben, wobei jeweils eine definierte Breite der Oberfläche bearbeitet wird. Nach Durchlaufen der Bahn s1 wird das Schneidwerkzeug 10, wie in gestrichelten Linien eingezeichnet, in die Position 10b verstellt und überfährt in entgegengesetzter Vorschubbewegung s2 mit wiederum schräg zur Vorschubrichtung eingestellter Schneidleiste 16 die zweite Hälfte der Oberfläche (mit wie ersichtlich einer definierten Überschneidung).

Dieser Vorgang kann bei größeren Breiten der Oberflächen in Schleifen oder mäanderförmig solange durchgeführt werden, bis die gesamte Oberfläche des Zylinderkopfes 22 fertig planbearbeitet ist. Gegebenenfalls kann bei weniger breiten Oberflächen auch ein einziger Arbeitsgang ausreichend sein.

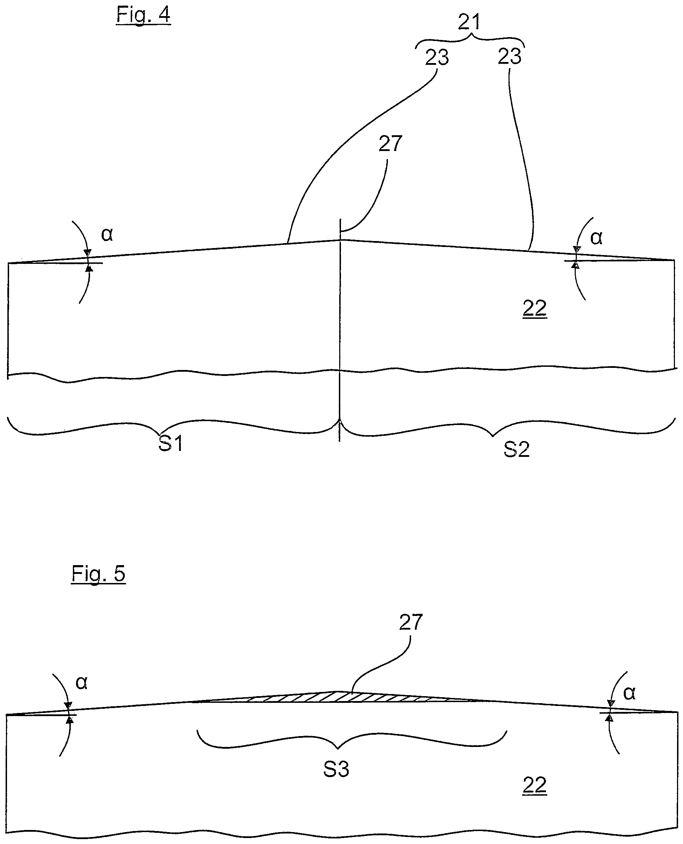

Anhand der Fig. 4 und 5 sind zusätzliche Bearbeitungsschritte zur Planbearbeitung der Dichtfläche 21 des Zylinderkopfes 22 erläutert. In der Fig. 4 ist in einer Seitenansicht entlang der Schnittebene I-I die Dichtfläche 21 nach einer Planbearbeitung gezeigt, wie sie gemäß der Vorbeschreibung der Fig. 3 bereits durchgeführt worden ist. Demzufolge ist das Schneidwerkzeug 10 entlang von einander überlappenden/überschneidenden Bearbeitungsbahnen s1, s2 über die Dichtfläche 21 des Zylinderkopfes 22 geführt worden. Die Flächen 23, 25 der Bearbeitungsbahnen s1, s2 sind jedoch nicht, wie angestrebt, zueinander ebenflächig ausgerichtet. Vielmehr laufen die Flächen 23 an einer Übergangskante 27 keilförmig bzw. stumpfwinklig zusammen.

Eine solcher nachteiliger Konturverlauf der Flächen 23 ergibt sich speziell bei älteren Bearbeitungsvorrichtungen, deren Schneidwerkzeug 10 toleranzbedingt von einer eingestellten 90°-Stellung, die eine ebenflächige Oberflächenbearbeitung erlaubt, um einen Winkelversatz abweicht. Der toleranzbedingte Winkelversatz des Schneidwerkzeugs 10 entspricht dem in der Fig. 4 eingezeichneten Keilwinkel α, mit dem die beiden Flächen 23 an der Übergangskante 27 zusammenlaufen. In der Fig. 4 sind die Keilwinkel α der Flächen 23 aus Gründen der Übersichtlichkeit übermäßig groß eingezeichnet.

Um trotz des toleranzbedingten Winkelversatzes des Schneidwerkzeugs 10 eine weitgehend plane Dichtfläche 21 des Zylinderkopfes 22 zu erreichen, wird das Schneidwerkzeug 10 gemäß der Fig. 5 in einer weiteren Bearbeitungsbahn s3 über die Dichtfläche 21 geführt. Die Bearbeitungsbahn s3 liegt zwischen der ersten und der zweiten Bearbeitungsbahn s1 und s2. Dadurch erfolgt im Bereich der Übergangskante 27, an dem die beiden Flächen 23 keilförmig zusammenlaufen, ein Materialabtrag, mit dem ein im Vergleich zur Fig. 4 gleichmäßigerer Oberflächenkontur erzielbar ist. Der Materialabtrag ist in der Fig. 5 durch Schraffur angedeutet.

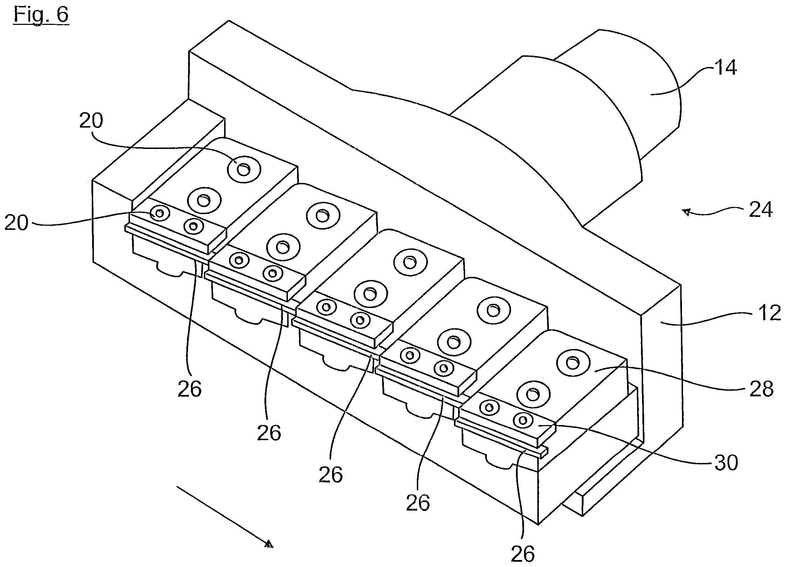

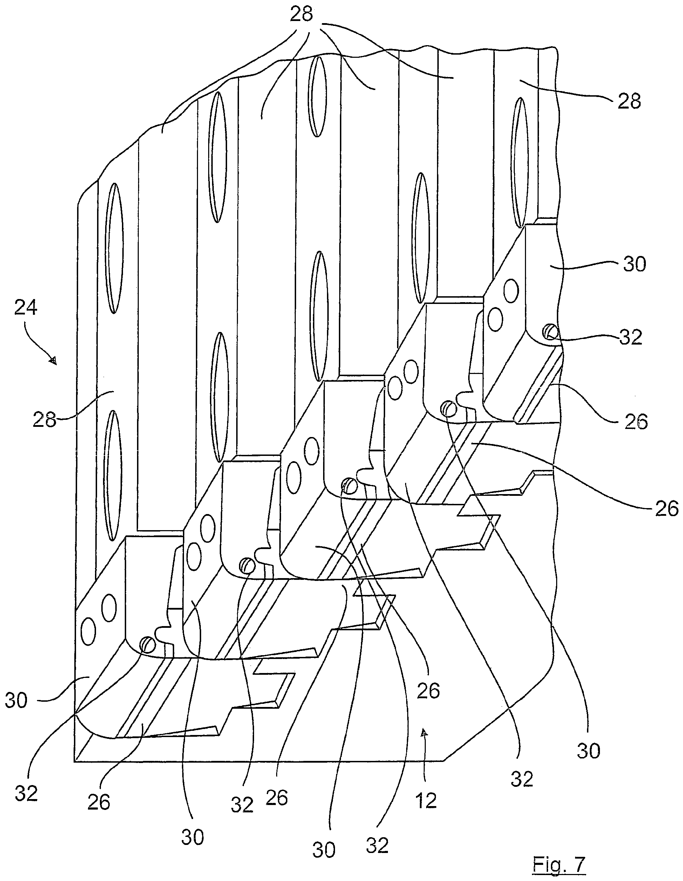

Die Fig. 6 und 7 zeigen ein alternatives Schneidwerkzeug 24, das nur soweit beschrieben ist, als es sich von der Ausführung gemäß Fig. 1 wesentlich unterscheidet. Funktionell gleiche Teile sind mit gleichen Bezugszeichen versehen.

Gemäß Fig. 6 weist das Schneidwerkzeug 24 eine Pinole 14 als Aufspannmittel zur Werkzeugmaschine und einen Trägerkörper 12 auf, an dem mehrere, kürzere Schneidleisten 26 in gestaffelter Anordnung vorgesehen sind.

Die Schneidleisten 26 sind jeweils mittels Kassetten 28 und Spannschienen 30 mittels allgemein mit 20 bezeichneter Schrauben an dem Trägerkörper 12 höheneinstellbar befestigt, um insgesamt eine präzise, plan ausgerichtete Schneidleiste 26 zu bilden.

Wesentlich ist dabei auch, dass die Schneidleisten 26 sich in Vorschubrichtung s betrachtet in ihrer Länge überschneiden und mit geringem Abstand zueinander gestaffelt sind (hintereinander liegen; vergleiche auch Fig. 6). Eine jede der Schneidleisten 26 kann alternativ oder zusätzlich auch leicht schräg mit Bezug zu einer linearen Vorschubrichtung s aufgespannt sein.

Die Fig. 7 zeigt ferner an den Spannschienen 28 ausgebildete, in Vorschubrichtung s vor den Schneidleisten 26 positionierte Auffangkanäle 32, die während der Planbearbeitung entstehende Späne aufnehmen und somit vom Schnittvorgang fernhalten.

Die Auffangkanäle 32 sind an Spülkanäle (nicht dargestellt) des Schneidwerkzeugs 10 angeschlossen, über die die Auffangkanäle 32 nach einem jeweiligen Bearbeitungszyklus bevorzugt mittels Druckluft von den abgetragenen Spänen freigeblasen werden können.

Des Weiteren können bei einer Planbearbeitung mit einem die Schneidleisten 26 (oder 16) schmierenden und kühlenden Medium bzw. einer Emulsion in dem Schneidwerkzeug 24 (bzw. 10) Kühlkanäle (nicht dargestellt) vorgesehen sein, die über eine entsprechende Fördereinrichtung die Emulsion zu den Schneidleisten 26 bzw. 16 leiten.

Anstelle des zur Fig. 3 beschriebenen Zylinderkopfes 22 können auch andere Bauteile aus Leichtmetall, insbesondere seriengefertigte Aggregatteile von Kraftfahrzeugen, wie vorbeschrieben planbearbeitet werden; zum Beispiel Dicht- oder Anschlussflächen von Zylinderkurbelgehäusen, Getriebegehäusen, etc..

Die Längen der Schneidleisten 16, 26 können im Rahmen der möglichen Vorschubkräfte und Schnittleistungen bevorzugt zwischen 0 mm und 200 mm ausgelegt sein.

## Patentansprüche

1. Verfahren zum Planbearbeiten von Oberflächen an Werkstücken, insbesondere aus Leichtmetalllegierungen, bei dem ein Schneidwerkzeug (10; 24) relativ zur Oberfläche in einer Vorschubrichtung (s) bewegt wird und Material in einer definierten Stärke spanend abträgt, wobei das Schneidwerkzeug (10; 24) mit einer oder mehreren, im Wesentlichen parallel zur Oberfläche ausgerichteten Schneidleisten (16; 26) in der Vorschubrichtung (s) bewegt wird, wobei die mindestens eine Schneidleiste (16; 26) (16; 26) stets in einem Winkel (Pi) von < 90°, jedoch > 0° zur Vorschubrichtung eingestellt wird, **dadurch gekennzeichnet, dass** der Winkel (Pi) der mindestens einen Schneidleiste (16; 26) zur Vorschubrichtung (s) während der Bearbeitung kontinuierlich oder temporär verändert wird.

2. Verfahren nach Anspruch 1, **dadurch gekennzeichnet, dass** der Winkel (Pi) bevorzugt zwischen 75° und 30° eingestellt wird.

3. Verfahren nach einem der vorhergehenden Ansprüche, **dadurch gekennzeichnet, dass** die mindestens eine Schneidleiste (16; 26) des Schneidwerkzeugs (10; 24) während der Vorschubbewegung (s) um einen Punkt (A) des Schneidwerkzeugs (10; 24) verschwenkt wird.

4. Verfahren nach Anspruch 4, **dadurch gekennzeichnet, dass** der Punkt (A) auf einer der Endseiten der mindestens einen Schneidleiste (16; 26) liegt.

5. Verfahren nach Anspruch 4, **dadurch gekennzeichnet, dass** der Punkt (A) mittig der mindestens einen Schneidleiste (16; 26) des Schneidwerkzeugs (10; 24) im Wesentlichen in der Mittelachse der Aufspanneinrichtung (14) liegt.

6. Verfahren nach Anspruch 4, **dadurch gekennzeichnet, dass** der Punkt (A) zwischen den Endseiten und der Mitte der mindestens einen Schneidleiste (16; 26) des Schneidwerkzeugs (10; 24) liegt.

7. Verfahren nach einem der vorhergehenden Ansprüche, **dadurch gekennzeichnet, dass** die eingesteuerte Vorschubrichtung (s) des Schneidwerkzeugs (10; 24) linear, kreisförmig, elliptisch oder anderweitig nichtlinear gesteuert wird und/oder dass eine Kraft quer zur Vorschubrichtung erzeugt wird, durch die das Schneidwerkzeug (10; 24) auf die Oberfläche des Werkstücks gedrückt wird.

## Claims

1. Method for facing surfaces of workpieces, in particular made from light metal alloys, in which a cutting tool (10;24) is moved in a feed direction (s) relative to the surface and removes material at a defined thickness by cutting, wherein the cutting tool (10;24) is moved in the feed direction (s) with one or more cutting bars (16; 26) aligned substantially in parallel to the surface, wherein the at least one cutting bar (16; 26) is always set at an angle (Pi) of < 90°, but > 0° to the feed direction, **characterised in that** the angle (Pi) of the at least one cutting bar (16; 26) to the feed direction (s) is continuously or temporarily changed during the processing.

2. Method according to claim 1, **characterised in that** the angle (Pi) is preferably set between 75° and 30°.

3. Method according to any one of the preceding claims, **characterised in that** the at least one cutting bar (16; 26) of the cutting tool (10; 24) is pivoted about a point (A) of the cutting tool (10; 24) during the feed movement (s).

4. Method according to claim 4, **characterised in that** the point (A) lies on one of the end sides of the at least one cutting bar (16; 26).

5. Method according to claim 4, **characterised in that** the point (A) lies in the middle of the at least one cutting bar (16; 26) of the cutting tool (10; 24) substantially in the central axis of the clamping device (14).

6. Method according to claim 4, **characterised in that** the point (A) lies between the end sides and the centre of the at least one cutting bar (16; 26) of the cutting tool (10; 24).

7. Method according to any one of the preceding claims, **characterised in that** the introduced feed direction (s) of the cutting tool (10; 24) is controlled in a linear, circular, elliptical or otherwise non-linear manner and/or that a force is generated transversely to the feed direction, through which the cutting tool (10; 24) is pressed onto the surface of the workpiece.

## Revendications

1. Procédé de dressage de surfaces au niveau de pièces, en particulier composées d'alliages en métal léger, où un outil de coupe (10 ; 24) est déplacé dans une direction d'avancement (s) par rapport à la surface et du matériau est enlevé par enlèvement de copeaux en une épaisseur définie, dans lequel l'outil de coupe (10 ; 24) est déplacé dans la direction d'avancement (s) avec une ou plusieurs barres de coupe (16 ; 26) orientées de manière sensiblement parallèle par rapport à la surface, dans lequel l'au moins une barre de coupe (16 ; 26) est réglée systématiquement selon un angle (Pi) < 90°, toutefois > 0° par rapport à la direction d'avancement, **caractérisé en ce que** l'angle (Pi) de l'au moins une barre de coupe (16 ; 26) par rapport à la direction d'avancement (s) est modifié en continu ou de manière temporaire pendant l'usinage.

2. Procédé selon la revendication 1, **caractérisé en ce que** l'angle (Pi) est réglé de manière préférée entre 75° et 30°.

3. Procédé selon l'une quelconque des revendications précédentes, **caractérisé en ce que** l'au moins une barre de coupe (16 ; 26) de l'outil de coupe (10 ; 24) est pivotée autour d'un point A de l'outil de coupe (10 ; 24) pendant le déplacement d'avancement (s).

4. Procédé selon la revendication 4, **caractérisé en ce que** le point (A) se situe sur un des côtés d'extrémité de l'au moins une barre de coupe (16 ; 26).

5. Procédé selon la revendication 4, **caractérisé en ce que** le point (A) se situe au centre de l'au moins une barre de coupe (16; 26) de l'outil de coupe (10; 24) sensiblement dans l'axe médian du système de serrage (14).

6. Procédé selon la revendication 4, **caractérisé en ce que** le point (A) se situe entre les côtés d'extrémité et le centre de l'au moins une barre de coupe (16 ; 26) de l'outil de coupe (10 ; 24).

7. Procédé selon l'une quelconque des revendications précédentes, **caractérisé en ce que** la direction d'avancement (s) pilotée de l'outil de coupe (10 ; 24) est commandée de manière linéaire, en forme de cercle, de manière elliptique ou autrement de manière non linéaire, et/ou qu'une force est générée de manière transversale par rapport à la direction d'avancement, par laquelle l'outil de coupe (10 ; 24) est pressé sur la surface de la pièce.
